(19) Europäisches Patentamt
European Patent Office
Office européen des brevets

(11) **EP 4 187 448 A1**

(12) **EUROPEAN PATENT APPLICATION**

(43) Date of publication:
**31.05.2023  Bulletin 2023/22**

(21) Application number: **22193874.9**

(22) Date of filing: **05.09.2022**

(51) International Patent Classification (IPC):
**G06N 5/01** (2023.01)        **G06N 7/01** (2023.01)

(52) Cooperative Patent Classification (CPC):
**G06N 5/01; G06N 7/01**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2021  JP 2021191710**

(71) Applicant: **FUJITSU LIMITED
Kawasaki-shi, Kanagawa 211-8588 (JP)**

(72) Inventor: **Yoneoka, Noboru
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **INFORMATION PROCESSING APPARATUS, INFORMATION PROCESSING METHOD, AND PROGRAM**

(57)     An information processing apparatus of searching for a solution to a problem represented by an energy function that includes state variables that represents a state of an Ising model, the information processing apparatus including: a storage unit that stores a plurality of tabu lists that indicates a state variable for which change of a value is suppressed among the state variables; and a processing unit that selects one tabu list from the plurality of tabu lists in accordance with a current state of the Ising model in searching for the solution, selects a first state variable from the state variables based on an amount of change of a value of the energy function in a case where a value of each of the state variables is changed from the current state and the selected tabu list, and changes a value of the first state variable.

FIG. 1

**Description**

FIELD

The embodiments discussed herein are related to an information processing apparatus, an information processing method, and a program.

BACKGROUND

An information processing apparatus may be used for obtaining a solution to a combinatorial optimization problem. An information processing apparatus converts a combinatorial optimization problem into an energy function of an Ising model which is a model representing a behavior of a spin of a magnetic body. The energy function may be referred to as an evaluation function or an objective function.

For example, the information processing apparatus searches for a combination that minimizes a value of the energy function among combinations of values of state variables included in the energy function. In this case, a combination of values of state variables that minimizes the value of the energy function corresponds to a ground state or an optimal solution expressed by a set of state variables. As a method for acquiring an approximate solution of a combinatorial optimization problem in a practical time, a simulated annealing (SA) method, a tabu search method, and the like are applied.

For example, a state space search device that obtains optimization of a nonlinear combinatorial optimization problem by using the tabu search method has been proposed. The proposed state space search device sequentially repeats processing of starting from an initial state of interest, determining a state to be transitioned from among adjacent states that is obtained by changing a combination of the states of interest, and setting the determined state as a next state of interest, and thus searches for a state having a best evaluation function value. At the time of creating the adjacent state, the proposed state space search device creates an adjacent state, which is not prohibited from creating the adjacent state by a tabu list, among adjacent states having one or more different combinations from the state of interest.

A combinatorial optimization system for solving a combinatorial optimization problem by tabu search has been proposed. The proposed combination optimization system searches for an optimal solution by repeating processing of adopting, as a next state, a state that is not included in a tabu list and has the best evaluation function value among all adjacent states for a current state.

A system for solving a problem based on an algorithm called a multi-start tabu search and a system for solving a problem of manufacturing and transport schedule adjusted by a plurality of manufacturers by the tabu search method have also been proposed.

Japanese Laid-open Patent Publication No. 2008-59146, Japanese Laid-open Patent Publication No. 2009-48353, U.S. Patent Application Publication No. 2016/0071021 Specification, and U.S. Patent Application Publication No. 2019/0080271 Specification are disclosed as related art.

SUMMARY

TECHNICAL PROBLEMS

As described above, in searching for a solution, the information processing apparatus may limit a state of a transition destination by a tabu list. For example, the information processing apparatus may hold, for each state variable, information indicating whether or not the state variable is a suppression target of change of a value, and information indicating a time until the suppression of change of the value is canceled when the state variable is the suppression target, in the tabu list.

However, in the search using the tabu list, there is a possibility that a part of possible states is repeatedly selected as a transition destination. For example, in the tabu search method, as described above, an adjacent state having the best evaluation value for the current state is selected as a transition destination. A term in which each state variable is treated as a suppression target of change of a value by the tabu list sequentially expires as the search proceeds. For this reason, for example, in the tabu search method, a series of state transitions may repeatedly occur in which the state transitions from a first state to a second state, then passes through a plurality of states, and when the state returns to the first state beyond the time, the state transitions from the first state to the second state again.

By contrast, in the tabu list, it may be considered that the time in which the state variable is treated as the suppression target of change of a value is set to be relatively long. However, as the time in which the state variable is treated as the suppression target becomes longer, the state transition destination is limited and a search range in the state space becomes narrower, and thus solution finding performance is lowered.

An object of an aspect of the embodiment is to provide an information processing apparatus, an information processing method, and a program which are capable of improving solution finding performance.

SOLUTION TO PROBLEM

According to an aspect of the embodiments, there is provided an information processing apparatus of searching for a solution to a problem represented by an energy function that includes a plurality of state variables that represents a state of an Ising model, the information processing apparatus including: a storage unit that stores a plurality of tabu lists that indicates a state variable for which change of a value is suppressed among the plurality of state variables; and a processing unit that selects one tabu list from the plurality of tabu lists in accordance with a current state of the Ising model in searching for the solution, selects a first state variable from the plurality of state variables based on an amount of change of a value of the energy function in a case where a value of each of the plurality of state variables is changed from the current state and the selected tabu list, and changes a value of the first state variable.

ADVANTAGEOUS EFFECT OF INVENTION

In an aspect, it is possible to improve solution finding performance.

BRIEF DESCRIPTION OF DRAWINGS

FIG. 1 is a diagram illustrating an information processing apparatus according to a first embodiment;
FIG. 2 is a diagram illustrating an example of hardware of an information processing apparatus according to a second embodiment;
FIG. 3 is a diagram illustrating an example of functions of the information processing apparatus;
FIG. 4 is a diagram illustrating an example of a tabu list;
FIG. 5 is a diagram illustrating an example of a tabu list for local solution;
FIG. 6 is a flowchart illustrating an example of processing of the information processing apparatus;
FIG. 7 is a flowchart illustrating an example of tabu_list selection;
FIG. 8 is a flowchart illustrating an example of tabu_list[k] selection and update;
FIG. 9 is a diagram illustrating an example of a state transition in a solution search by the information processing apparatus;
FIG. 10 is a diagram illustrating a comparative example of the solution search by a greedy search;
FIG. 11 is a diagram illustrating a comparative example of the solution search by a tabu search method;
FIG. 12 is a diagram illustrating a comparative example of a state transition by the tabu search method; and
FIG. 13 is a diagram illustrating another example of hardware of the information processing apparatus.

DESCRIPTION OF EMBODIMENTS

The embodiments will be described below with reference to the drawings.

[First Embodiment]

A first embodiment will be described.

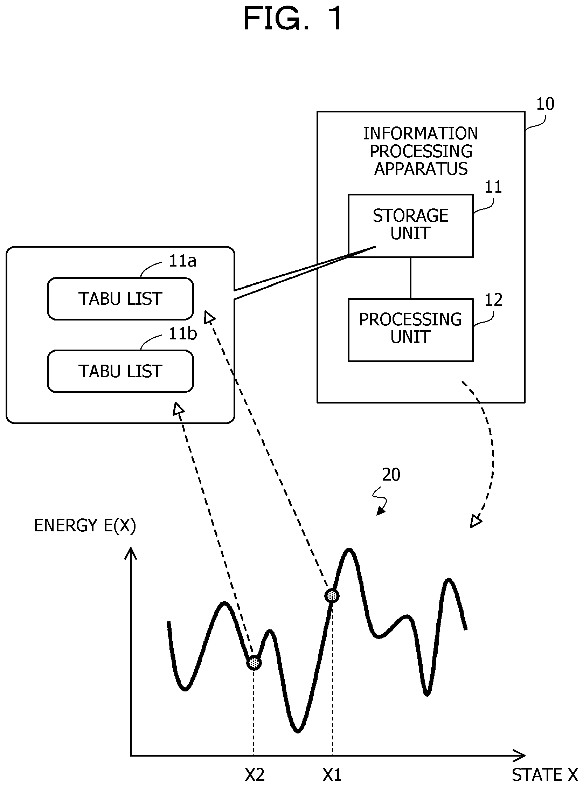

FIG. 1 is a diagram illustrating an information processing apparatus according to the first embodiment.
An information processing apparatus 10 searches for a solution to a combinatorial optimization problem by using a tabu search method, an SA method, or the like, and outputs the searched solution. The information processing apparatus 10 includes a storage unit 11 and a processing unit 12. The storage unit 11 may be a volatile storage device such as a random-access memory (RAM), or may be a non-volatile storage device such as a flash memory. The storage unit 11 may include an electronic circuit such as a register. The processing units 12 may be an electronic circuit such as a central processing unit (CPU), a digital signal processor (DSP), an application-specific integrated circuit (ASIC), a field-programmable gate array (FPGA), or a graphics processing unit (GPU). The processing unit 12 may be a processor that executes a program. A "processor" may be a set of a plurality of processors (multiprocessor).
The combinatorial optimization problem is formulated by an Ising-type energy function and is replaced with, for example, a problem of minimizing a value of the energy function. The energy function includes a plurality of state variables. The state variables are binary variables taking a value of 0 or 1. The state variables may be written as a bit. A value of the energy function indicates energy corresponding to the state of the Ising model represented by values of the plurality of state variables. A solution of the combinatorial optimization problem is represented by the values of the plurality of state variables. The solution that minimizes the value of the energy function represents a ground state of the Ising model, and corresponds to an optimal solution of the combinatorial optimization problem.

The Ising-type energy function is expressed in Equation (1).

$$E(\boldsymbol{x}) = -\frac{1}{2} \sum_{\langle i,j \rangle} W_{ij} x_i x_j - \sum_i b_i x_i \qquad (1)$$

A state vector x has a plurality of state variables as elements, and represents a state of the Ising model. Equation (1) is an energy function formulated in a quadratic unconstrained binary optimization (QUBO) form. In the case of energy-maximization problem, the sign of the energy function may be reversed.

A first term on the right side of Equation (1) is obtained by integrating a product of values of two state variables and a weight coefficient for all combinations of the two state variables that are selectable from all state variables without omission and duplication. Subscripts i and j are indices of state variables. $x_i$ is an i-th state variable. $x_j$ is a j-th state variable. $W_{ij}$ is a weight coefficient indicating a weight or a strength of coupling between the i-th state variable and the j-th state variable. $W_{ij} = W_{ji}$ and $W_{ii} = 0$ are satisfied.

A second term on the right side of Equation (1) is a sum of products of a bias of each of all the state variables and a value of the state variable. $b_i$ indicates the bias for the i-th state variable. Problem information including the weight coefficient, the bias, and the like included in the energy function is stored in the storage unit 11.

When a value of the state variable $x_i$ is changed to become $1 - x_i$, an increment in the state variable $x_i$ is represented as $\delta x_i = (1 - x_i) - x_i = 1 - 2x_i$. For the energy function E(x), an amount of change $\Delta E_i$ of energy associated with change of the state variable $x_i$ is expressed in Equation (2).

$$\Delta E_i = (1 - 2x_i) \left( \sum_j W_{ij} x_j + b_i \right) \qquad (2)$$

When the state variable $x_i$ that satisfies $\Delta E_i < 0$ changes from 0 to 1 or from 1 to 0, the energy E(x) decreases. In this case, the solution after the change of $x_i$ is an improved solution obtained by improving the current solution.

The information processing apparatus 10 searches for a solution by using a tabu list. The tabu list is information indicating a state variable, among the plurality of state variables, that suppresses change of a value. The tabu list holds information indicating a time in which change of a value of the state variable is suppressed for each of the plurality of state variables. The tabu list has a counter, for each state variable, indicating the time.

The storage unit 11 stores a plurality of tabu lists. As will be described later, the processing unit 12 selectively uses the plurality of tabu lists in accordance with the current state in the search for the solution. As an example, the processing unit 12 uses the plurality of tabu lists to perform a search method obtained by improving the tabu search method. The tabu search method is a search method based on a greedy search.

The greedy search is a method in which a procedure of calculating $\Delta E_i$ in a case where each of the values of all state variables are changed for the current state, selecting a state variable $x_k$ causing a minimum $\Delta E_i$, and inverting a value of $x_k$ to set a next state is repeated. An initial state in the search for a solution, for example, an initial solution is given in advance. According to Equation (2), when $\Delta E < 0$, the energy E of the next candidate state decreases. A next state in which the energy E decreases most from the current state is selected. A best solution obtained after the above-described procedure is repeated for a certain period of time, for example, a solution having the smallest energy is a final solution. For a local solution, for example, in a case of a state in which $\Delta E$ is positive for all indices, the energy E increases even when the value of any state variable is inverted, and each of the next candidate states is a worsened solution. In the case where the current state is the local solution, the candidate state in which $\Delta E$ is smallest, for example, $\Delta E$ is a positive value closest to 0, is selected as the next state.

Based on the greedy search, the processing unit 12 performs the tabu search method using the tabu list as follows. For searching for a solution, when a value of a certain state variable is changed, the processing unit 12 sets a positive integer value in the counter of the state variable to be changed in the tabu list. The positive integer value is referred to as tabu tenure. The positive integer value may be a randomly determined value. The processing unit 12 sets a state variable for which the counter in the tabu list is 0 as a change candidate of a value. The processing unit 12 excludes a state variable for which the counter is larger than 0 from the change candidates of the value. However, in a case where the best solution obtained at the current moment, for example, the solution having the smallest energy is updated after the value of a certain state variable is changed, the processing unit 12 includes the state variable in the candidates for a change target of the value regardless of the tabu list. Every time the value of one state variable changes, for example, every time a state transition occurs, the processing unit 12 subtracts 1 from the counter having a positive value in the tabu list. A state variable for which the counter becomes 0 due to the subtraction is added to the change candidates again.

As described above, the processing unit 12 searches for a solution by using the plurality of tabu lists stored in the storage unit 11. The processing unit 12 selects a tabu list from among the plurality of tabu lists according to the current state of the Ising model. Based on the amount of change of the value of the energy function when the value of each of the plurality of state variables is changed from the current state and the selected tabu list, the processing unit 12 selects a first state variable from among the plurality of state variables. The processing unit 12 changes a value of the first state variable.

A graph 20 illustrates an example of energy $E(X)$ with respect to a state X of the Ising model. The horizontal axis of the graph 20 indicates the state X plotted in one dimension. The horizontal axis of the graph 20 indicates the energy $E(X)$ calculated based on Equation (1).

In a first example, the plurality of tabu lists stored in the storage unit 11 includes tabu lists 11a and 11b. The processing unit 12 uses the tabu list 11a for a state of other than a local solution, for example, a state of a non-local solution, and uses the tabu list 11b for a state of the local solution. For example, it is assumed that the current state is a state X1 in the search for the solution by the processing unit 12. The state X1 is not the local solution. In this case, the processing unit 12 selects the first state variable based on $\Delta E_i$ and the tabu list 11a, and changes the value of the first state variable. It is assumed that the current state is a state X2 in the search for the solution by the processing unit 12. The state X2 is a local solution. In this case, the processing unit 12 selects the first state variable based on $\Delta E_i$ and the tabu list 11b, and changes the value of the first state variable. Each time the state transition occurs, the processing unit 12 updates the counter of each state variable in the tabu list 11a. For the tabu list 11b, the processing unit 12 updates the counter of each state variable only in the state transition from the local solution.

The processing unit 12 determines whether or not the current state is the local solution, based on $\Delta E_i$. For example, when all $\Delta E_i$ are positive, the processing unit 12 determines that the current state is the local solution. When at least one of $\Delta E_i$ is equal to or smaller than 0, the processing unit 12 determines that the current state is not the local solution.

In a second example, the storage unit 11 holds a plurality of tabu lists in association with a plurality of local solutions obtained by searching for a solution. A number N of tabu lists held in the storage unit 11 is determined in advance. For example, the storage unit 11 holds a first tabu list in association with a first local solution and holds a second tabu list in association with a second local solution. When the current state is a local solution, the processing unit 12 selects a tabu list corresponding to the local solution in accordance with which one local solution held in the storage unit 11 the local solution matches. In this case, for example, the processing unit 12 updates the counter of each state variable in the tabu list corresponding to the local solution only when the state transitions from the one local solution.

The tabu list corresponding to the local solution for the current state may not exist in the storage unit 11. In this case, when the number of tabu lists held in the storage unit 11 in association with one local solution does not reach N, the processing unit 12 stores the tabu list corresponding to the local solution in the storage unit 11. On the other hand, when the number of tabu lists held in the storage unit 11 reaches N, the processing unit 12 replaces the tabu list corresponding to a local solution, for which the time has elapsed the longest after the local solution was reached last, with the tabu list corresponding to the local solution of this time.

A third example is a combination of the first example and the second example. The storage unit 11 further holds one or more tabu lists in addition to the tabu lists 11a and 11b of the first example. The tabu list 11a is not associated with any local solution. The storage unit 11 holds the tabu list 11b in association with the state X2 of a local solution. The storage unit 11 holds another tabu list in association with another local solution. The processing unit 12 uses the tabu list 11a for a state of a non-local solution and uses tabu lists other than the tabu list 11a for a state of a local solution. For example, when the current state is a local solution, the processing unit 12 refers to the storage unit 11 and selects a tabu list corresponding to the local solution. Each time the state transition occurs, the processing unit 12 updates the counter of each state variable in the tabu list 11a. For tabu lists other than the tabu list 11a, the processing unit 12 updates the counter of each state variable only when the state transitions from the local solution corresponding to the tabu list.

According to the information processing apparatus 10, the plurality of tabu lists indicating the state variable for which the value change is suppressed among the plurality of state variables included in the energy function are held in the storage unit 11. The plurality of tabu lists is used in the search for the solution. For example, one tabu list is selected from the plurality of tabu lists in accordance with the current state of the Ising model. The first state variable is selected from the plurality of state variables based on the amount of change of the value of the energy function when the value of each of the plurality of state variables is changed from the current state and the selected tabu list. The value of the first state variable is changed. Accordingly, the information processing apparatus 10 may improve the solution finding performance.

In the search using the tabu list, there is a possibility that a part of the possible states is repeatedly selected as the transition destination. For example, in the tabu search method, when the state transitions from the first state to the second state for each state variable, then passes through a plurality of states, and returns to the first state at the time beyond a suppression target time set by the tabu tenure, there may be a case where the state circles and transitions repeatedly from the first state to the second state. By contrast, in the tabu list, it may be considered that the time in which the state variable is treated as the suppression target of the value change is set to be relatively long, for example, the tabu tenure is set to be relatively large. However, as the time in which the state variable is treated as the suppression target becomes longer, the state transition destination is limited and a search range in the state space becomes narrower, and thus solution finding performance is lowered. The state space indicates a whole set of states that the Ising model may take.

The information processing apparatus 10 holds the plurality of tabu lists and selectively uses the tabu list in accordance with the current state, so it is possible to easily hold information indicating the restriction on the transition destination for the state corresponding to the tabu list for a relatively long time. Accordingly, the information processing apparatus 10 may suppress retransition from the state corresponding to the tabu list to the specific state. The information processing apparatus 10 does not have to set the tabu tenure to a relatively large value, and it is possible to suppress the search range from being excessively limited. As such, the information processing apparatus 10 may increase the possibility of reaching the optimal solution and improve the solution finding performance.

Although the tabu search method is exemplified, the information processing apparatus 10 may search for a solution using a plurality of tabu lists in a case where another search method such as the SA method or a replica exchange method is used.


[Second Embodiment]

Next, a second embodiment will be described.

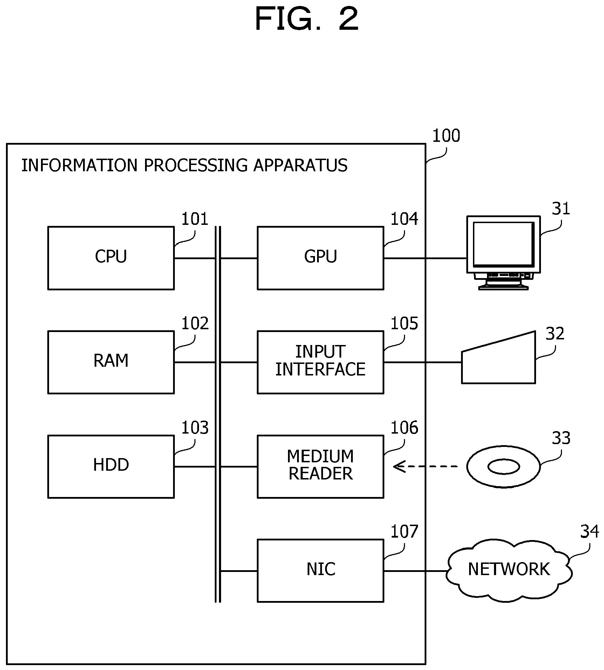

FIG. 2 is a diagram illustrating an example of hardware of an information processing apparatus according to the second embodiment.

An information processing apparatus 100 searches for a solution to the combinatorial optimization problem by using the tabu search method, and outputs the searched solution. The combinatorial optimization problem is formulated by the Ising-type energy function of Equation (1), and is replaced with a problem that the value of the energy function is minimized. The state variables included in the energy function are written as bits in the following description.

The information processing apparatus 100 includes a CPU 101, a RAM 102, a hard disk drive (HDD) 103, a graphics processing unit (GPU) 104, an input interface 105, a medium reader 106, and a network interface card (NIC) 107. The CPU 101 is an example of the processing unit 12 of the first embodiment. The RAM 102 or the HDD 103 is an example of the storage unit 11 of the first embodiment.

The CPU 101 is a processor that executes instructions of a program. The CPU 101 loads at least part of the program and data stored in the HDD 103 into the RAM 102 and executes the program. The CPU 101 may include a plurality of processor cores. The information processing apparatus 100 may include a plurality of processors. Processing described below may be executed in parallel by using the plurality of processors or processor cores. A set of the plurality of processors is sometimes referred to as a "multiprocessor" or merely a "processor".

The RAM 102 is a volatile semiconductor memory that temporarily stores the program executed by the CPU 101 and data used in an operation performed by the CPU 101. The information processing apparatus 100 may include a memory of a type other than the RAM and may include a plurality of memories.

The HDD 103 is a nonvolatile storage device that stores data and programs of software such as an operating system (OS), middleware, and application software. The information processing apparatus 100 may include a storage device of another type such as a flash memory or a solid-state drive (SSD) or may include a plurality of nonvolatile storage devices.

The GPU 104 outputs an image to a display 31 coupled to the information processing apparatus 100 in accordance with an instruction from the CPU 101. As for the display 31, it is possible to use a desired type of display such as a cathode ray tube (CRT) display, a liquid crystal display (LCD), a plasma display, and an organic electro-luminescence (OEL) display.

The input interface 105 obtains an input signal from an input device 32 coupled to the information processing apparatus 100 and outputs the input signal to the CPU 101. As for the input device 32, it is possible to use a pointing device such as a mouse, a touch panel, a touch pad, and a trackball, a keyboard, a remote controller, a button switch, and the like. A plurality of kinds of input devices may be coupled to the information processing apparatus 100.

The medium reader 106 is a reading device that reads a program and data recorded in a recording medium 33. As for the recording medium 33, it is possible to use a magnetic disk, an optical disk, a magneto-optical (MO) disk, a semiconductor memory, and the like, for example. Examples of the magnetic disk include a flexible disk (FD) and an HDD. Examples of the optical disc include a compact disc (CD) and a Digital Versatile Disc (DVD).

The medium reader 106 copies the program and the data read from the recording medium 33 to a different recording medium such as the RAM 102 and the HDD 103. The read program is executed by, for example, the CPU 101. The recording medium 33 may be a portable recording medium and may be used to distribute the program and the data in some cases. The recording medium 33 or the HDD 103 may be referred to as a computer-readable recording medium.

The NIC 107 is an interface that is coupled to a network 34 and that performs communication with another computer through the network 34. The NIC 107 is coupled to, for example, a communication device such as a switch or a router through a cable. The NIC 107 may be an interface that performs wireless communication.

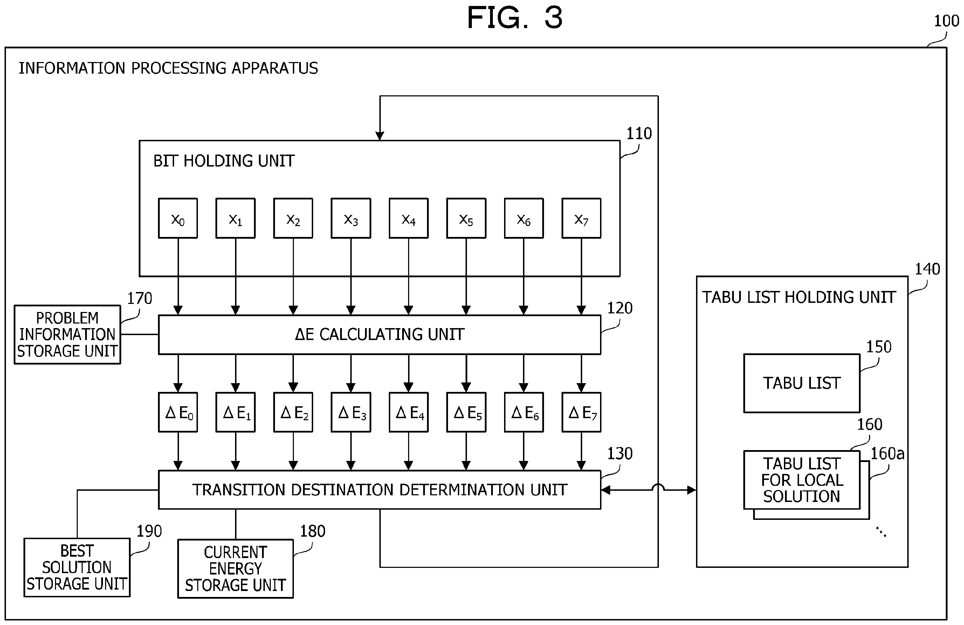

FIG. 3 is a diagram illustrating an example of the functions of the information processing apparatus.

The information processing apparatus 100 includes a bit holding unit 110, a ΔE calculating unit 120, a transition destination determination unit 130, a tabu list holding unit 140, a problem information storage unit 170, a current energy storage unit 180, and a best solution storage unit 190. A storage area of the RAM 102 or the HDD 103 is used for the bit holding unit 110, the tabu list holding unit 140, the problem information storage unit 170, the current energy storage unit 180, and the best solution storage unit 190. For example, the CPU 101 achieves functions of the ΔE calculating unit 120 and the transition destination determination unit 130 by executing a program stored in the RAM 102. As will be described later, the ΔE calculating unit 120 and the transition destination determination unit 130 may be realized by an electronic circuit such as a GPU and an FPGA.

The bit holding unit 110 holds a bit string indicating the current state of the Ising model. As an example, the bit holding unit 110 holds bits $x_0$ to $x_7$. Each bit is identified by an index. The number of bits may be a number other than 8. At an initial stage of the search, an initial value of each bit is set in the bit holding unit 110.

A unit of processing for transition from the current state to the next state is defined as one iteration. In this case, a search period from the initial state until the acquisition of the final solution is input to the information processing apparatus 100 in advance as the total number of iterations num_iteration.

For the bits $x_0$ to $x_7$, the ΔE calculating unit 120 calculates $\Delta E_i = \Delta E_0$ to $\Delta E_7$ based on Equation (2). The ΔE calculating unit 120 outputs $\Delta E_0$ to $\Delta E_7$ to the transition destination determination unit 130. Values of the weight coefficient W and the bias b included in Equation (2) are stored in the problem information storage unit 170.

The transition destination determination unit 130 determines a bit to be inverted based on $\Delta E_0$ to $\Delta E_7$ and the tabu list held in the tabu list holding unit 140. The transition destination determination unit 130 selects a bit $x_k$ corresponding to the minimum value $\Delta E_k$ among $\Delta E_0$ to $\Delta E_7$, and inverts the value of $x_k$ held in the bit holding unit 110 to set the bit as the next state. Based on $\Delta E_k$ supplied from the ΔE calculating unit 120, the transition destination determination unit 130 updates the energy E held in the current energy storage unit 180 to the energy in the next state ($E + \Delta E_k$). In a case where the best solution obtained up to the current moment is updated by the bit inversion, the transition destination determination unit 130 stores the best solution and energy corresponding to the best solution in the best solution storage unit 190. After the search processing for the number of num_iteration is completed, the transition destination determination unit 130 outputs the best solution held in the best solution storage unit 190 as a finally obtained solution.

In selection of the bit $x_k$, the transition destination determination unit 130 limits the selection candidate bit based on the tabu list. According to the current state, the transition destination determination unit 130 selects and uses one tabu list among the plurality of tabu lists held in the tabu list holding unit 140.

The tabu list holding unit 140 includes a tabu list 150 and tabu lists 160, 160a, ... for local solution. The tabu list 150 is a tabu list corresponding to a non-local solution. The tabu lists 160, 160a, ... for local solution are tabu lists corresponding to the local solution.

In a case where a certain bit is inverted in the search for the solution, the transition destination determination unit 130 sets a positive integer value of tt (tabu tenure) in the counter of the bit to be inverted in the tabu list used. tt represents the number of iterations for prohibiting inversion of the bit to be inverted. The transition destination determination unit 130 may set tt to a fixed value or a random number in a certain range. For example, the transition destination determination unit 130 may perform calculation as tt = 20 + rand (0 to 10). rand (0 to 10) is a function that randomly generates 0 to 10.

The transition destination determination unit 130 sets a bit for which the counter takes 0 in the tabu list as an inversion candidate. The transition destination determination unit 130 excludes a bit for which the counter value is larger than 0 from the inversion candidates.

However, when the best solution at the current moment is updated after inversion of a certain bit $x_i$, the transition destination determination unit 130 includes the bit $x_i$ in the inversion candidates regardless of the counter corresponding to the bit $x_i$ in the tabu list. Such processing is referred to as aspiration.

Every time one bit is inverted, for example, every time the state transition occurs, the transition destination determination unit 130 subtracts 1 from the counter having a positive value in the corresponding tabu list. A bit for which the counter is set to 0 by the subtraction is added to the inversion candidates again.

The problem information storage unit 170 stores the weight coefficient W and the bias b in Equation (2) corresponding to the combinatorial optimization problem. The current energy storage unit 180 stores energy of a current state. The best solution storage unit 190 stores a best solution obtained at the current moment and energy of the best solution.

Examples of the method of prohibiting inversion of the bit using the tabu list include a method of inhibiting reaching a state reached once or a plurality of times at a relatively high frequency in the past, and a method of prohibiting another change of the bit that is changed once as described above for a certain period. According to the Ising model, the number of states in the search space may be as large as 2^(the number of bits). For this reason, it is preferable to use the latter method rather than the former method. Chapter 3.3 of Document 1 below serves as a reference for the method of prohibiting inversion of the bit.

Document 1: Y. Wang et al, "Path relinking for unconstrained binary quadratic programming", European Journal of Operational Research, volume 223, Issue 3, December 16, 2012, pp. 595-604

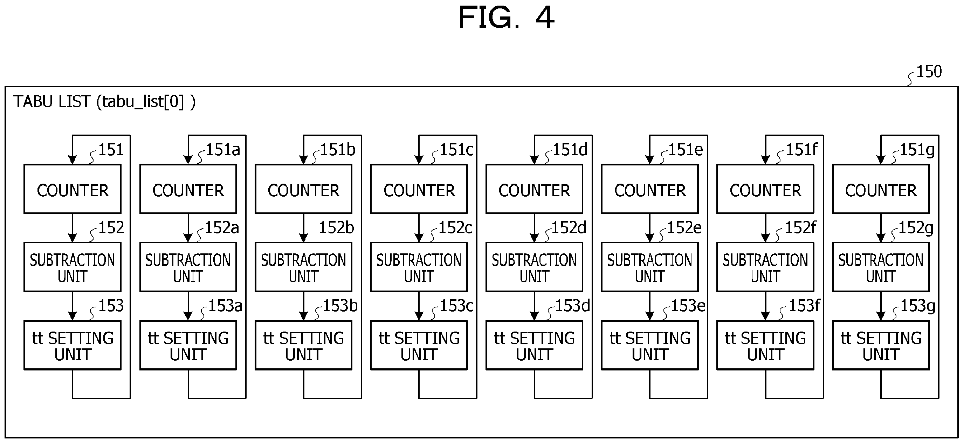

FIG. 4 is a diagram illustrating an example of a tabu list.

The tabu list 150 is written as tabu_list[0]. The tabu list 150 has counters 151 to 151g. The tabu list 150 has subtraction units 152 to 152g and tt setting units 153 to 153g. As described above, the subtraction units 152 to 152g and the tt setting units 153 to 153g may be realized as functions of the transition destination determination unit 130.

The counters 151 to 151g are counters corresponding to the bits $x_0$ to $x_7$. An initial value of the counters 151 to 151g is 0.

The subtraction units 152 to 152g correspond to the counters 151 to 151g on a one-to-one basis. For each state transition, when a corresponding counter is positive, the subtraction units 152 to 152g subtract 1 from the counter.

The tt setting units 153 to 153g correspond to the counters 151 to 151g on a one-to-one basis. For each state transition, the tt setting units 153 to 153g set tt in the counter corresponding to the inverted bit.

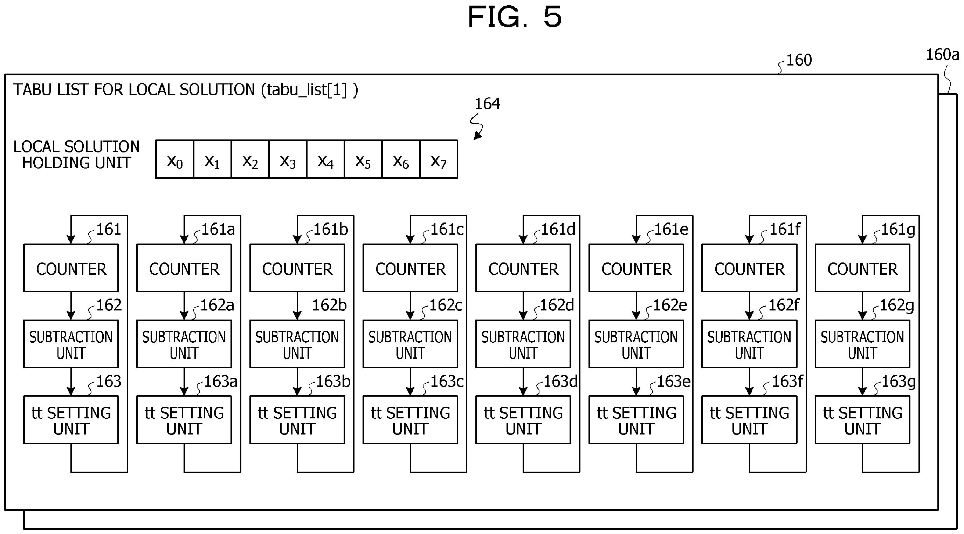

FIG. 5 is a diagram illustrating an example of a tabu list for local solution.

The tabu list 160 for local solution is written as tabu_list[1]. The tabu list 160 for local solution has counters 161 to 161g. The tabu list 160 for local solution has subtraction units 162 to 162g and tt setting units 163 to 163g. As described above, the subtraction units 162 to 162g and the tt setting units 163 to 163g may be realized as functions of the transition destination determination unit 130. The tabu list 160 for local solution has a local solution holding unit 164.

The counters 161 to 161g are counters corresponding to the bits $x_0$ to $x_7$. An initial value of the counters 161 to 161g is 0.

The subtraction units 162 to 162g correspond to the counters 161 to 161g on a one-to-one basis. In a case where the current state is a local solution held in the local solution holding unit 164 and the state transition occurs from the local solution, when a corresponding counter is positive, the subtraction units 162 to 162g subtract 1 from the counter.

The tt setting units 163 to 163g correspond to the counters 161 to 161g on a one-to-one basis. In a case where the current state is a local solution held in the local solution holding unit 164 and the state transition occurs from the local solution, the tt setting units 163 to 163g set tt in a counter corresponding to an inverted bit.

The local solution holding unit 164 holds a local solution corresponding to the tabu list 160 for local solution.

Other tabu lists for local solution including the tabu list 160a for local solution have the same description as that of the tabu list 160 for local solution. The tabu lists 160, 160a, ... for local solution are written as tabu_list[1], tabu_list[2], ..., respectively. An upper limit M of the sum of the numbers of tabu lists held in the tabu list holding unit 140 and the tabu lists for local solution is determined in advance in accordance with the nature of the problem or the like. The tabu lists 160, 160a, ... for local solution each are held in an empty state in an initial stage, for example, in the tabu list holding unit 140 without being associated with any local solution.

The tabu lists 160, 160a, ... for local solution may hold information indicating a time elapsed since the relevant local solution corresponding to the tabu list for local solution finally is reached. For example, the tabu lists 160, 160a, ... for local solution may hold information indicating the number of iterations elapsed since the corresponding local solution finally is reached.

Next, a processing procedure for solving a combinatorial optimization problem in the information processing apparatus 100 will be described next.

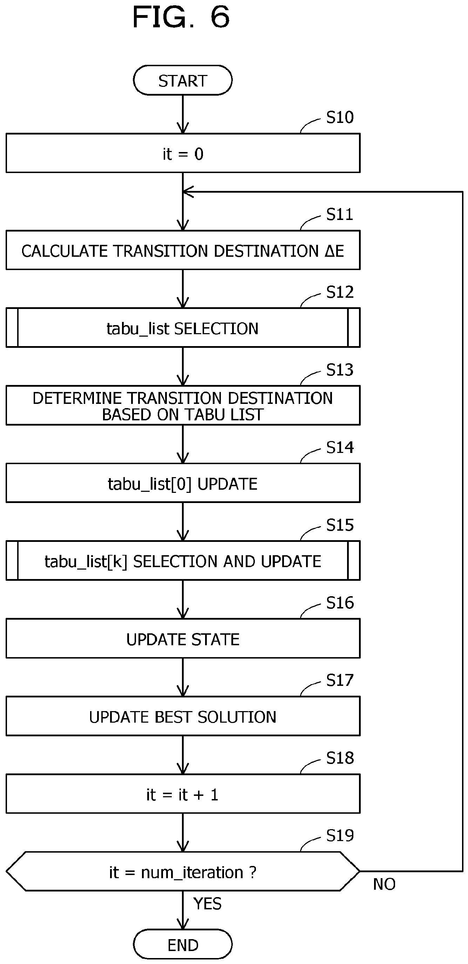

FIG. 6 is a flowchart illustrating an example of processing of the information processing apparatus.

(S10) The transition destination determination unit 130 sets the number of iterations it as it = 0. An initial value is set in each bit of the bit holding unit 110. Energy in an initial state corresponding to an initial value of each bit is set in the current energy storage unit 180. The total number of iterations numjteration of the search is given to the transition destination determination unit 130 in advance. W and b for the combinatorial optimization problem are stored in the problem information storage unit 170 in advance.

(S11) The ΔE calculating unit 120 calculates $\Delta E_i$ for the state of the transition destination candidate based on Equation (2). For all indices i, the transition destination determination unit 130 calculates $\Delta E_i$. The ΔE calculating unit 120 outputs the calculated $\Delta E_i$ to the transition destination determination unit 130.

(S12) The transition destination determination unit 130 performs tabu_list selection. The transition destination determination unit 130 selects one tabu list among tabu_list[0], tabu_list[1], .... Details of the tabu_list selection will be described later.

(S13) The transition destination determination unit 130 determines the state of the transition destination based on the tabu list selected in step S12. For example, the transition destination determination unit 130 excludes an inversion candidate bit based on the tabu list, and selects a bit having the smallest $\Delta E_i$ among the remaining inversion candidate bits. The transition destination determination unit 130 sets a state in which the selected bit is inverted as the state of transition destination.

At this time, the transition destination determination unit 130 performs the aspiration processing described above. For example, the transition destination determination unit 130 obtains energy of the state of transition destination candidate based on the current state energy stored in the current energy storage unit 180 and $\Delta E_i$. In a case where the energy is smaller than the energy of the best solution at the current moment for a certain bit, the transition destination determination unit 130 includes the bit in the inversion candidate regardless of the value of the counter in the tabu list. In a case where the best solution at the current moment is not yet held in the best solution storage unit 190, the transition destination determination unit 130 does not perform the aspiration processing.

(S14) The transition destination determination unit 130 updates tabu_list[0], for example, the tabu list 150. For example, the transition destination determination unit 130 subtracts 1 from the counter having a positive value in the counters 151 to 151g. The transition destination determination unit 130 sets the positive integer value of tt in the counter corresponding to the bit selected in step S13 among the counters 151 to 151g.

(S15) The transition destination determination unit 130 executes tabu_list[k] selection and update. Details of the tabu_list[k] selection and update will be described below.

(S16) The transition destination determination unit 130 updates the state by inverting the bit selected in step S13 among the bits held in the bit holding unit 110. Based on $\Delta E_i$ corresponding to the inverted bit, the transition destination determination unit 130 updates the current energy E stored in the current energy storage unit 180 as, for example, $E = E + \Delta E_i$.

(S17) The transition destination determination unit 130 updates the best solution. For example, in a case where the best solution is not held in the best solution storage unit 190, the transition destination determination unit 130 sets the current state as the best solution and stores the current state together with the energy of the current state in the best solution storage unit 190. By contrast, in a case where the existing best solution is held in the best solution storage unit 190, the transition destination determination unit 130 compares the energy of the existing best solution with the energy of the current state. When the energy of the current state is smaller, the transition destination determination unit 130 stores the current state as a new best solution together with the energy of the current state in the best solution storage unit 190.

(S18) The transition destination determination unit 130 sets it as it = it + 1. For example, the transition destination determination unit 130 adds 1 to it.

(S19) The transition destination determination unit 130 determines whether or not it reaches numjteration, for example, whether or not it = num_iteration. When it = num_iteration, the transition destination determination unit 130 outputs the best solution held in the best solution storage unit 190 as a solution of the combinatorial optimization problem, and ends the processing. When it < num_iteration, the transition destination determination unit 130 advances the processing to step S11.

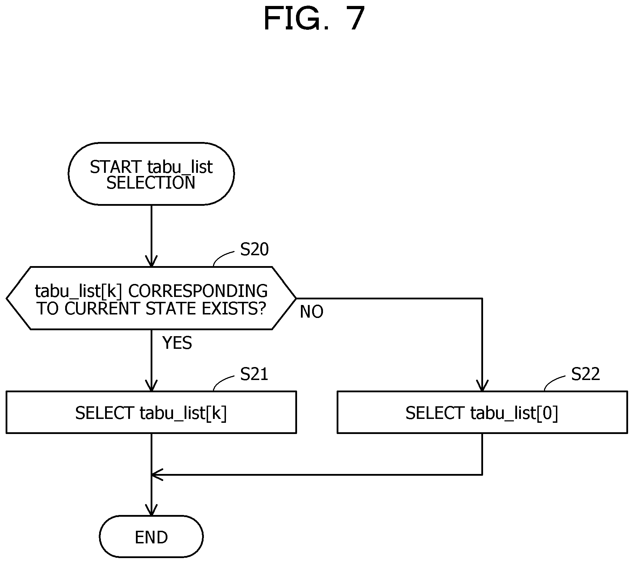

FIG. 7 is a flowchart illustrating an example of tabu_list selection.

The tabu_list selection corresponds to step S12.

(S20) The transition destination determination unit 130 determines whether or not tabu_list[k] corresponding to the current state, for example, a tabu list for local solution exists in the tabu list holding unit 140. Here, k is an integer equal to or greater than 1. When tabu_list[k] corresponding to the current state exists, the transition destination determination unit 130 advances the processing to step S21. When tabu_list[k] corresponding to the current state does not exist, the transition destination determination unit 130 advances the processing to step S22. In a case where there is a bit string that matches the bit string of the current state among the bit strings held in the local solution holding unit of each of the tabu lists 160, 160a, ... for local solution, the transition destination determination unit 130 determines that the relevant tabu list for local solution, for example, tabu_list[k] exists. By contrast, when there is no bit string that matches the bit string of the current state among the bit strings held in the local solution holding unit of each of the tabu lists 160, 160a, ... for local solution, the transition destination determination unit 130 determines that tabu_list[k] does not exist.

(S21) The transition destination determination unit 130 selects tabu_list[k] the presence of which is confirmed in step S20. tabu_list[k] is a tabu list for local solution. The transition destination determination unit 130 ends the tabu_list selection.

(S22) The transition destination determination unit 130 selects tabu_list[0]. tabu_list[0] is a tabu list for non-local solution. The transition destination determination unit 130 ends the tabu_list selection.

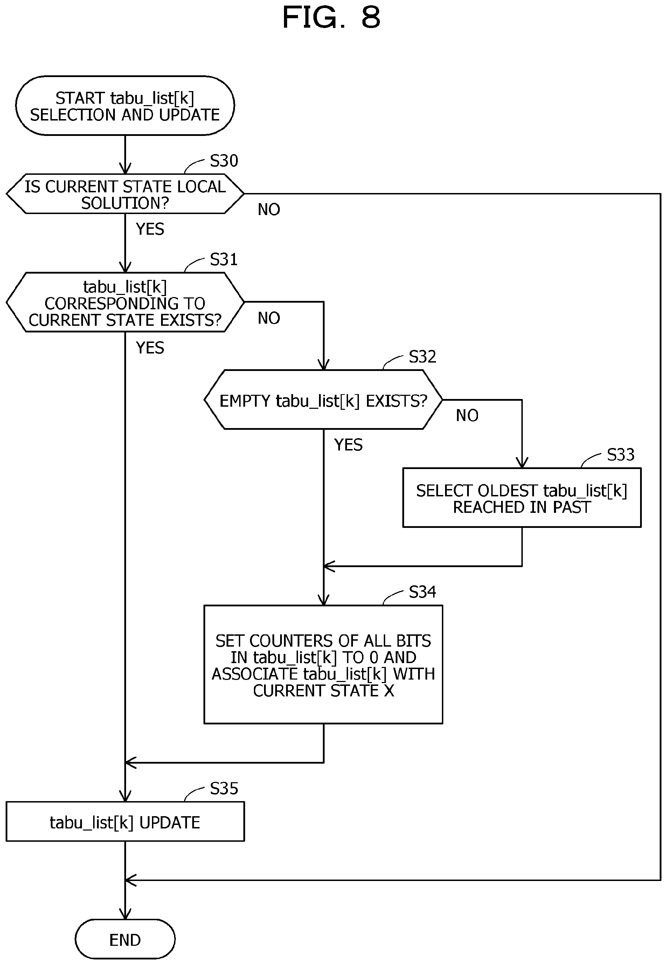

FIG. 8 is a flowchart illustrating an example of tabu_list[k] selection and update.

The tabu_list[k] selection and update correspond to step S15.

(S30) The transition destination determination unit 130 determines whether or not the current state is a local solution. In the case where the current state is a local solution, the transition destination determination unit 130 advances the processing to step S31. In the case where the current state is not a local solution, the transition destination determination unit 130 ends the tabu_list[k] selection and update. In a case where all $\Delta E_i$ for each index obtained this time are positive, the transition destination determination unit 130 determines that the current state is a local solution. In a case where at least one of $\Delta E_i$ for each index obtained this time is equal to or smaller than 0, the transition destination determination unit 130 determines that the current state is not a local solution.

(S31) The transition destination determination unit 130 determines whether or not tabu_list[k] corresponding to the current state exists. In a case where tabu_list[k] corresponding to the current state exists, the transition destination determination unit 130 advances the processing to step S35. In a case where tabu_list[k] corresponding to the current state does not exist, the transition destination determination unit 130 advance the processing to step S32. A determination process in step S31 is similar to that in step S20.

(S32) The transition destination determination unit 130 determines whether or not an empty tabu_list[k] exists. The empty tabu_list[k] is a tabu list for local solution that is not associated with any local solution. In a case where the empty tabu_list[k] exists, the transition destination determination unit 130 advances the processing to step S34. In a case where the empty tabu_list[k] do not exist, the transition destination determination unit 130 advances the processing to step S33.

(S33) The transition destination determination unit 130 selects the oldest tabu_list[k] reached in the past. The oldest tabu_list[k] reached in the past corresponds to a tabu list for local solution for which the longest time has elapsed since the corresponding local solution was finally reached.

(S34) The transition destination determination unit 130 sets the counters of all bits of the selected oldest tabu_list[k] to 0. The transition destination determination unit 130 associates tabu_list[k] with the current state X by storing the current state X in the local solution holding unit of tabu_list[k].

(S35) The transition destination determination unit 130 updates tabu_list[k], for example, the k-th tabu list for local solution. For example, the transition destination determination unit 130 subtracts 1 from the counter having a positive value in the counters for all bits of tabu_list[k]. The transition destination determination unit 130 sets the positive integer value of tt to the counter corresponding to the bit selected in step S13 among the counters for all bits in tabu_list[k]. The transition destination determination unit 130 ends the tabu_list [k] selection and update.

According to the procedure described above, the information processing apparatus 100 may suppress the cyclic state transition to a specific state in a solution search. For example, a description will be given as follows.

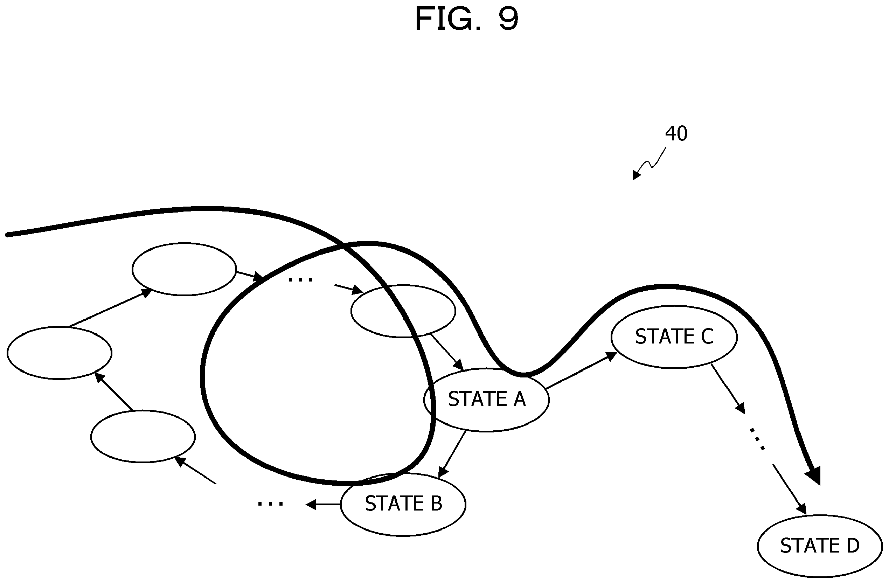

FIG. 9 illustrates an example of a state transitions in the solution search by the information processing apparatus.

For example, a state A is a local solution. A state of a transition destination in which $\Delta E$ is minimized with respect to the state A is a state B. From the state B, the state A may be reached again via a plurality of states. A state C is a state of a transition destination candidate from the state A. A state D is an optimal solution.

In a case where there is only one tabu list, a series of transitions such as a transition from the state A to the state B, a transition from the state B to the state A via a plurality of states, and a transition from the state A to the state B may repeatedly occur over a relatively long period of time.

Accordingly, the information processing apparatus 100 uses the plurality of tabu lists. For example, based on tabu_list[k] (k > 0) corresponding to the state A, when the state A is reached again, the information processing apparatus 100 may suppress repetition of transition from the state A to the state B. For example, from the state A until the state returns to the state A via the plurality of states, when the number of local solutions is equal to or smaller than M - 1, tabu_list[k] corresponding to the state A exists. For this reason, the information processing apparatus 100 may suppress repeated transition from the state A to the specific next state B by tabu_list[k] corresponding to the state A. A transition route 40 illustrates an example in which, when the state A is reached again after the transition from the state A to the state B, the transition to the state B is suppressed based on the tabu list corresponding to the state A, and the state transitions to the state C. Due to transition from the state A to a state (for example, the state C) other than the state B, the information processing apparatus 100 may increase the possibility of reaching the state D of the optimal solution.

A comparative example of the solution search in a case where another search method is used will be described next.

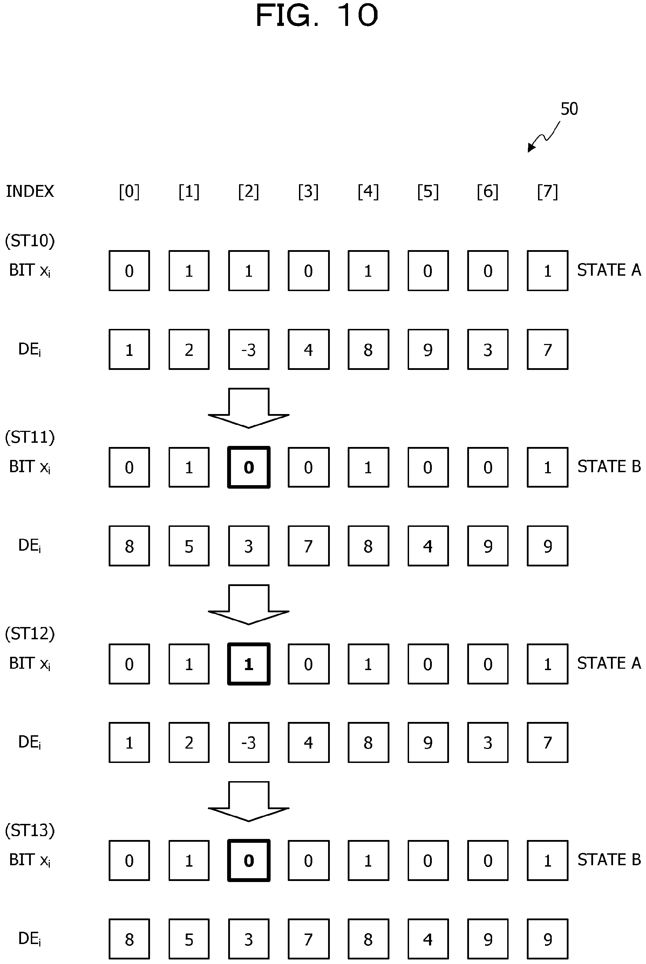

FIG. 10 is a diagram illustrating a comparative example of the solution search by the greedy search.

A time chart 50 illustrates a state transition in a case where the information processing apparatus 100 performs the solution search only by the greedy search without using a tabu list. First, the state A is held in the bit holding unit 110 (step ST10). The state A corresponds to a bit string 01101001. Each digit of the bit string corresponds to indices 0 to 7 from the left side to the right side. For each index, the information processing apparatus 100 calculates $\Delta E_i$. Among the calculated $\Delta E_i$, $\Delta E_2$ is the smallest.

By inverting the bit $x_2$ corresponding to $\Delta E_2$, the information processing apparatus 100 sets the state B of the transition destination (step ST11). The state B corresponds to a bit string 01001001. For each index, the information processing apparatus 100 calculates $\Delta E_i$. All $\Delta E_i$ are positive. For example, the state B is a local solution. Among the calculated $\Delta E_i$, $\Delta E_2$ is the smallest.

By inverting the bit $x_2$ corresponding to $\Delta E_2$, the information processing apparatus 100 sets the state A of the transition destination (step ST12). For each index, the information processing apparatus 100 calculates $\Delta E_i$. Among the calculated $\Delta E_i$, $\Delta E_2$ is the smallest.

By inverting the bit $x_2$ corresponding to $\Delta E_2$, the information processing apparatus 100 sets the state B of the transition destination (step ST13). For each index, the information processing apparatus 100 calculates $\Delta E_i$. Among the calculated $\Delta E_i$, $\Delta E_2$ is the smallest. After that, the information processing apparatus 100 repeats the above-described procedure.

As described above, in the greedy search, there may a case where the state transitions repeatedly between specific states. Accordingly, the tabu search method is used.

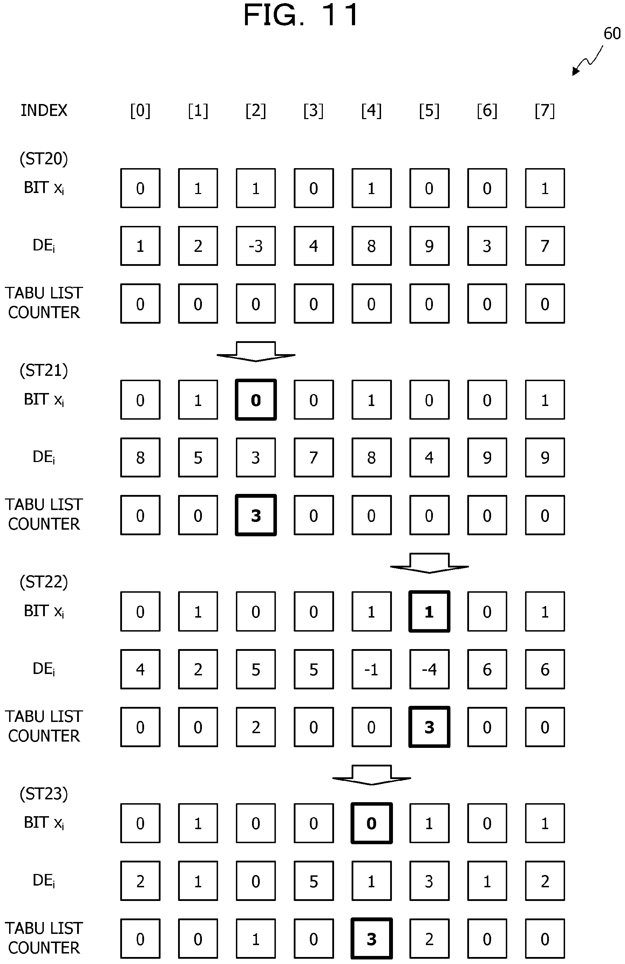

FIG. 11 is a diagram illustrating a comparative example of the solution search by a tabu search method.

A time chart 60 illustrates a state transition in a case where the information processing apparatus 100 performs the solution search by the tabu search method using one tabu list. Tabu list counters that are counters included in the one tabu list are illustrated in the time chart 60.

First, the bit holding unit 110 holds the state of a bit string 01101001 (step ST20). The tabu list counters for all bits take 0. For each index, the information processing apparatus 100 calculates $\Delta E_i$. Among the calculated $\Delta E_i$, $\Delta E_2$ is the smallest.

By inverting the bit $x_2$ corresponding to $\Delta E_2$, the information processing apparatus 100 sets a bit string 01001001 indicating the state of the transition destination (step ST21). The information processing apparatus 100 sets a positive integer value of tt to the tabu list counter corresponding to the bit $x_2$. For example, it is assumed that tt = 3. For each index, the information processing apparatus 100 calculates $\Delta E_i$. All $\Delta E_i$ are positive. For example, the state is a local solution. Among the calculated $\Delta E_i$, $\Delta E_2$ is the smallest. By contrast, a value larger than 0 is set for the bit $x_2$ in the tabu list counter. For this reason, the bit $x_2$ is excluded from inversion candidates. Among $\Delta E_i$ excluding $\Delta E_2$, $\Delta E_5$ is the smallest.

By inverting the bit $x_5$ corresponding to $\Delta E_5$, the information processing apparatus 100 sets a bit string 01001101 indicating the state of the transition destination (step ST22). The information processing apparatus 100 subtracts 1 from the tabu list counter corresponding to the bit $x_2$. The information processing apparatus 100 sets a positive integer value of tt = 3 to the tabu list counter corresponding to the bit $x_5$. For each index, the information processing apparatus 100 calculates $\Delta E_i$. Among the calculated $\Delta E_i$, $\Delta E_5$ is the smallest. By contrast, a value larger than 0 is set for the bits $x_2$ and $x_5$ in the tabu list counter. For this reason, the bits $x_2$ and $x_5$ are excluded from the inversion candidates. Among $\Delta E_i$ excluding $\Delta E_2$ and $\Delta E_5$, $\Delta E_4$ is the smallest.

By inverting the bit $x_4$ corresponding to $\Delta E_4$, the information processing apparatus 100 sets a bit string 01000101 indicating the state of the transition destination (step ST23). The information processing apparatus 100 subtracts 1 from the tabu list counter corresponding to each of the bits $x_2$ and $x_5$. The information processing apparatus 100 sets a positive integer value of tt = 3 to the tabu list counter corresponding to the bit $x_4$. For each index, the information processing apparatus 100 calculates $\Delta E_i$. Among the calculated $\Delta E_i$, $\Delta E_2$ is the smallest. By contrast, a value larger than 0 is set for the bits $x_2$, $x_4$, and $x_5$ in the tabu list counter. For this reason, the bits $x_2$, $x_4$, and $x_5$ are excluded from inversion candidates. Among $\Delta E_i$ excluding $\Delta E_2$, $\Delta E_4$, and $\Delta E_5$, $\Delta E_1$ and $\Delta E_6$ are the smallest. As the next inversion target, the information processing apparatus 100 selects the bit $x_1$ or the bit $x_6$. After that, the information processing apparatus 100 repeats the above-described procedure.

As described above, in the tabu search method, unlike the greedy search, it is possible to avoid going back and forth between specific states by using the tabu list.

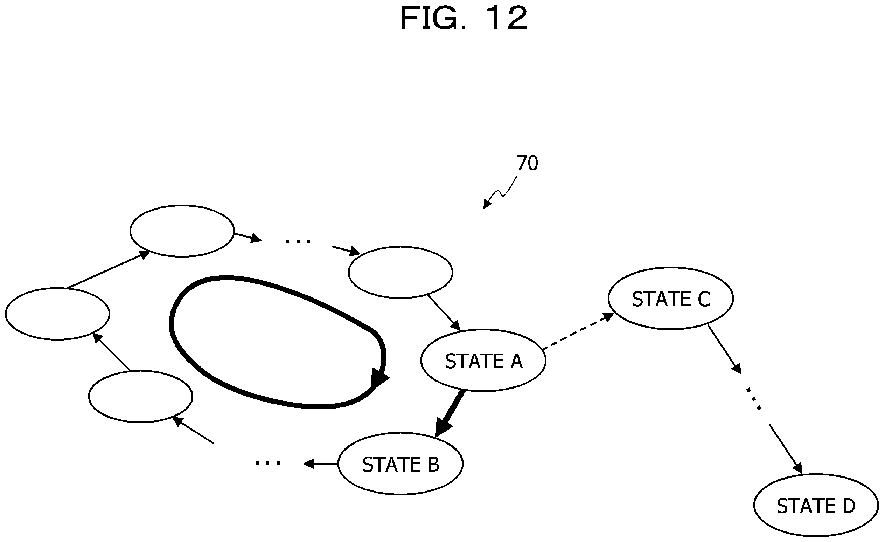

FIG. 12 is a diagram illustrating a comparative example of a state transition by the tabu search method.

However, in the tabu search method of the comparative example illustrated in FIG. 11, as described above, there may be the cyclic state transition to the same state beyond the transition suppression range by the single tabu list. When the information processing apparatus 100 selects a bit to be inverted based on $\Delta E$ of each bit from the state A, the state transitions to the state B. When the state A is reached again, the information processing apparatus 100 suppresses the transition to the state B, and the state C is passed, thus the possibility of transition to the state D of the optimal solution increases. However, in a case where the number of iterations from the state A as a starting point until the state A is reached again is larger than tt, the single tabu list may not suppress the transition to the state B. A transition route 70 indicates an example in which, when the state A is reached again after the transition from the state A to the state B, the state A repeatedly transitions to the state B.

By setting the value of tt to be relatively large, it may be possible to suppress the repeated transition from the state A to the state B. However, when the value of tt is increased, the transition destination is more limited and the search range is narrowed as a side effect in many cases. For this reason, the solution finding performance of the information processing apparatus 100 decreases.

Accordingly, the information processing apparatus 100 uses a plurality of tabu lists and selectively uses the tabu list in accordance with the state, and thus, for example, it is possible to suppress repeated transition to a specific next state B by the tabu list corresponding to the state A. Due to transition from the state A to a state (for example, the state C) other than the state B, the information processing apparatus 100 may increase the possibility of reaching the state D of the optimal solution. Since tt does not have to be a relatively large value, it is possible to suppress that the search range becomes too narrow due to tt. Accordingly, the information processing apparatus 100 may improve the solution finding performance.

Functions of the information processing apparatus 100 illustrated in FIGs. 3 to 5 may be realized by a hardware accelerator equipped with a GPU or the like.

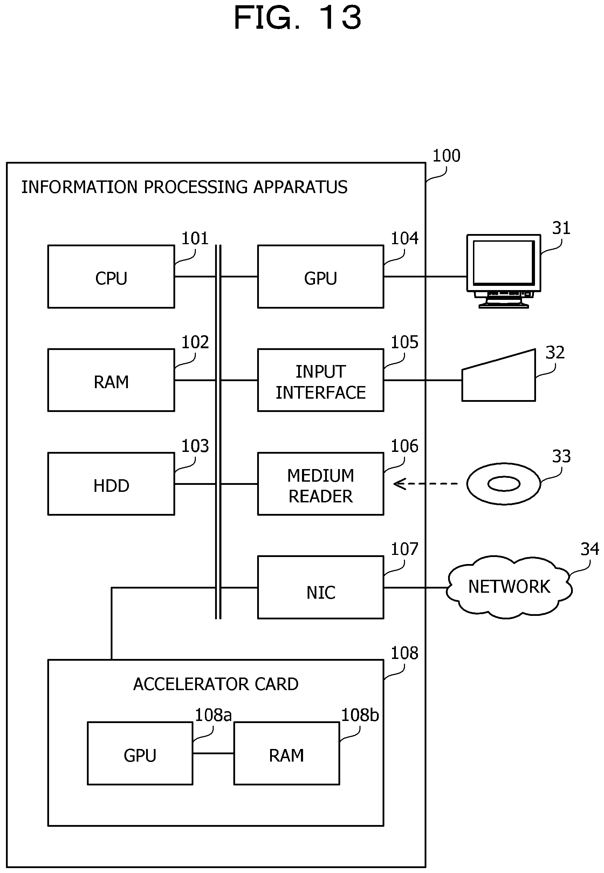

FIG. 13 is a diagram illustrating another example of hardware of the information processing apparatus.

For example, the information processing apparatus 100 may include an accelerator card 108 in addition to the hardware illustrated in FIG. 2. The accelerator card 108 includes a GPU 108a and a RAM 108b. A function of the information processing apparatus 100 of the second embodiment may be realized by the accelerator card 108. For example, a storage area of the RAM 108b may be used for the bit holding unit 110, the tabu list holding unit 140, the problem information storage unit 170, the current energy storage unit 180, and the best solution storage unit 190. The $\Delta E$ calculating unit 120, the transition destination determination unit 130, the subtraction units 152 to 152g, the tt setting units 153 to 153g, and the subtraction unit and the tt setting unit for each bit in each tabu list for local solution may be realized by the GPU 108a. The accelerator card 108 may include another type of electronic circuit such as an FPGA, and each of the functions described above may be realized by the electronic circuit.

For example, the information processing apparatus 100 of the second embodiment may execute the following processing.

The information processing apparatus 100 searches for a solution of a problem represented by an energy function including a plurality of state variables representing a state of the Ising model. The tabu list holding unit 140 stores a plurality of tabu lists indicating state variables in which value changes are suppressed among the plurality of state variables. In searching for a solution, the transition destination determination unit 130 selects one tabu list from the plurality of tabu lists in accordance with the current state of the Ising model. Based on the amount of change of the value of the energy function when the value of each of the plurality of state variables is changed from the current state and the selected tabu list, the transition destination determination unit 130 selects the first state variable from the plurality of state variables. The transition destination determination unit 130 changes the value of the first state variable.

Accordingly, the information processing apparatus 100 may suppress the cyclic state transition with respect to the specific state and may suppress the restriction of the search range of the solution. For this reason, the information processing apparatus 100 may improve the solution finding performance. The storage device such as the RAM 102 and the RAM 108b or the HDD 103 used for storing a plurality of tabu lists as the tabu list holding unit 140 is an example of a storage unit.

The plurality of tabu lists may include a first tabu list and a second tabu list. The transition destination determination unit 130 may select the first tabu list when the current state is a non-local solution, and may select the second tabu list when the current state is a local solution.

Accordingly, the information processing apparatus 100 may suppress repeated transition from a certain local solution to a specific state, may suppress the restriction of the search range of the solution, and may improve the solution finding performance. A case where the current state is a local solution is, for example, a case where all $\Delta E_i$ in Equation (2) are positive. A case where the current state is a non-local solution is, for example, a case where at least one of $\Delta E_i$ in Equation (2) is equal to or smaller than 0. Depending on the definition of the problem or $\Delta E_i$, when the current state is a local solution, for example, all $\Delta E_i$ in Equation (2) may be negative in some cases.

For example, the first tabu list and the second tabu list have a counter indicating a time until suppression of change of the value is canceled for each of the plurality of state variables. When the current state is a non-local solution, the transition destination determination unit 130 selects the first state variable by using the first tabu list. The transition destination determination unit 130 subtracts the predetermined value from the counter having a nonzero value in the first tabu list, and sets a first value in the counter corresponding to the first state variable in the first tabu list. By contrast, when the current state is a local solution, the transition destination determination unit 130 selects the first state variable by using the second tabu list. Further, the transition destination determination unit 130 subtracts a predetermined value from the counter having the nonzero value in each of the first tabu list and the second tabu list. The transition destination determination unit 130 sets a second value in the counter corresponding to the first state variable in the first tabu list, and sets a third value in the counter corresponding to the first state variable in the second tabu list.

Accordingly, the information processing apparatus 100 may suppress repeated transition from a certain local solution to a specific state, may suppress the restriction of the search range of the solution, and may improve the solution finding performance. The above-described positive integer value of tt, for example, the tabu tenure is an example of the first value and the second value. All of the first value, the second value, and the third value may be the same value. At least two of the first value, the second value, and the third value may be different from each other.

The plurality of tabu lists may be associated with the plurality of local solutions obtained during the search for the solution. In a case where the current state corresponds to any of the plurality of local solutions, the transition destination determination unit 130 may select a tabu list corresponding to the local solution from among the plurality of tabu lists.

Accordingly, the information processing apparatus 100 may suppress repeated transition from a certain local solution to a specific state, may suppress the restriction of the search range of the solution, and may improve the solution finding performance.

For example, each of the plurality of tabu lists has a counter indicating a time until suppression of change of the value is canceled for each of the plurality of state variables. In a case where the current state corresponds to any local solution of the plurality of local solutions associated with the plurality of second tabu lists, the transition destination determination unit 130 selects the first state variable by using the selected tabu list. The transition destination determination unit 130 subtracts a predetermined value from the counter having the nonzero value in the tabu list, and sets a value of tabu tenure in the counter corresponding to the first state variable in the tabu list.

Accordingly, the information processing apparatus 100 may suppress repeated transition from a certain local solution to a specific state, may suppress the restriction of the search range of the solution, and may improve the solution finding performance.

Alternatively, the plurality of tabu lists may include the first tabu list and the plurality of second tabu lists associated with the plurality of local solutions obtained during the search for the solution. In a case where the current state does not correspond to any of the plurality of local solutions, the transition destination determination unit 130 selects the first tabu list. In a case where the current state corresponds to one local solution of the plurality of local solutions, the transition destination determination unit 130 selects a second tabu list corresponding to the one local solution from among the plurality of second tabu lists.

Accordingly, the information processing apparatus 100 may suppress repeated transition from a certain local solution to a specific state, may suppress the restriction of the search range of the solution, and may improve the solution finding performance.

For example, each of the plurality of tabu lists has a counter indicating a time until suppression of change of the value is canceled for each state variable. In a case where the current state does not correspond to any of the plurality of local solutions associated with the plurality of second tabu lists, the transition destination determination unit 130 selects the first state variable by using the selected first tabu list. The transition destination determination unit 130 subtracts a predetermined value from the counter having a nonzero value in the first tabu list, and sets a first value in the counter corresponding to the first state variable in the first tabu list. By contrast, in a case where the current state corresponds to any one of the plurality of local solutions associated with the plurality of second tabu lists, the transition destination determination unit 130 selects the first state variable by using the selected second tabu list. The transition destination determination unit 130 subtracts a predetermined value from the counter having a nonzero value in each of the first tabu list and the second tabu list. The transition destination determination unit 130 sets a second value in the counter corresponding to the first state variable in the first tabu list, and sets a third value in the counter corresponding to the first state variable in the second tabu list.

Accordingly, the information processing apparatus 100 may suppress repeated transition from a certain local solution to a specific state, may suppress the restriction of the search range of the solution, and may improve the solution finding performance.

In a case where the current state is another local solution that does not correspond to any of the plurality of local solutions associated with the plurality of second tabu lists, the transition destination determination unit 130 determines whether or not the number of the plurality of second tabu lists associated with any local solution held in the tabu list holding unit 140 reaches the upper limit. When the upper limit has not been reached, the transition destination determination unit 130 adds the second tabu list associated with the other local solution to the tabu list holding unit 140. When the upper limit has been reached, the transition destination determination unit 130 deletes, from the tabu list holding unit 140, the second tabu list associated with a local solution having the longest time since the local solution is finally reached among the plurality of local solutions associated with the plurality of second tabu lists. Further, the transition destination determination unit 130 adds the second tabu list associated with the other local solution to the tabu list holding unit 140.

Accordingly, the information processing apparatus 100 may appropriately add the second tabu list for a new local solution, and may suppress repeated transition from the local solution to a specific state. In the information processing apparatus 100, the second tabu list for a local solution that is unlikely to be reached in future may be replaced with the second tabu list for a new local solution, and thus the storage resource may be efficiently used.

When selecting the first state variable, the transition destination determination unit 130 specifies a plurality of change candidate state variables among the plurality of state variables based on the selected tabu list. The transition destination determination unit 130 may select, as the first state variable, a state variable corresponding to the best amount of change among the amount of change corresponding to each of the plurality of change candidate state variables.

Accordingly, the information processing apparatus 100 may efficiently search for a solution. For example, the information processing apparatus 100 may quickly reach a better solution. For example, in the case of a problem of minimizing energy, a better solution is obtained as the energy is lower. The information processing apparatus 100 may use another search method such as the SA method or the replica exchange method.

At this time, the transition destination determination unit 130 may perform the aforementioned aspiration processing in selecting the first state variable. For example, even when a state variable is a state variable that is excluded from the plurality of change candidate state variables by the selected tabu list, in a case where a solution better than the best solution already obtained at the current moment may be obtained by changing the value of the state variable, the transition destination determination unit 130 may select the state variable as the first state variable.

Accordingly, the transition destination determination unit 130 may efficiently search for a solution. For example, the information processing apparatus 100 may quickly reach a better solution.

Information processing according to the first embodiment may be implemented by causing the processing unit 12 to execute a program. Information processing according to the second embodiment may be implemented by causing the CPU 101 to execute a program. The programs may be recorded in a computer-readable recording medium 33.

For example, the program may be circulated by distributing the recording medium 33 that records the program. The program may be stored in another computer and distributed via a network. For example, the computer may store (install) the program recorded in the recording medium 33 or the program received from another computer in the storage device such as the RAM 102 or the HDD 103, read the program from the storage device, and execute the program.

**Claims**

1. An information processing apparatus of searching for a solution to a problem represented by an energy function that includes a plurality of state variables that represents a state of an Ising model, the information processing apparatus comprising:

   a storage unit that stores a plurality of tabu lists that indicates a state variable for which change of a value is suppressed among the plurality of state variables; and
   a processing unit that selects one tabu list from the plurality of tabu lists in accordance with a current state of the Ising model in searching for the solution, selects a first state variable from the plurality of state variables based on an amount of change of a value of the energy function in a case where a value of each of the plurality of state variables is changed from the current state and the selected tabu list, and changes a value of the first state variable.

2. The information processing apparatus according to claim 1, wherein the plurality of tabu lists includes a first tabu list and a second tabu list, and
   the processing unit selects the first tabu list when the current state is a non-local solution, and selects the second tabu list when the current state is a local solution.

3. The information processing apparatus according to claim 2, wherein the first tabu list and the second tabu list includes a counter that indicates a time until suppression of change of the value is canceled for each of the plurality of state variables, and

   the processing unit selects,
   when the current state is the non-local solution, the first state variable by using the first tabu list, subtracts a predetermined value from the counter with a nonzero value in the first tabu list, and sets a first value in the counter corresponding to the first state variable in the first tabu list, and
   selects, when the current state is the local solution, the first state variable by using the second tabu list, subtracts the predetermined value from the counter with a nonzero value in each of the first tabu list and the second tabu list, sets a second value to the counter corresponding to the first state variable in the first tabu list, and sets a third value to the counter corresponding to the first state variable in the second tabu list.

4. The information processing apparatus according to claim 1, wherein the plurality of tabu lists is associated with a plurality of local solutions obtained in searching for the solution, and
   when the current state corresponds to one local solution of the plurality of local solutions, the processing unit selects the tabu list corresponding to the local solution from among the plurality of tabu lists.

5. The information processing apparatus according to claim 1, wherein the plurality of tabu lists includes a first tabu list and a plurality of second tabu lists associated with a plurality of local solutions obtained in searching for the solution, and
   the processing unit selects the first tabu list when the current state does not correspond to any of the plurality of local solutions, and selects, when the current state corresponds to one local solution of the plurality of local solutions, a second tabu list corresponding to the one local solution from among the plurality of second tabu lists.

**6.** The information processing apparatus according to claim 5, wherein each of the plurality of tabu lists has a counter that indicates a time until suppression of change of the value is canceled for each state variable,

the processing unit selects,
when the current state does not correspond to any of the plurality of local solutions, the first state variable by using the selected first tabu list, subtracts a predetermined value from the counter with a nonzero value in the first tabu list, and sets a first value to the counter corresponding to the first state variable in the first tabu list, and selects, when the current state corresponds to the any local solution of the plurality of local solutions, the first state variable by using the selected second tabu list, subtracts the predetermined value from the counter with a nonzero value in each of the first tabu list and the second tabu list, sets a second value to the counter corresponding to the first state variable in the first tabu list, and sets a third value to the counter corresponding to the first state variable in the second tabu list.

**7.** The information processing apparatus according to claim 5, wherein the processing unit determines,

when the current state is another local solution that does not correspond to any of the plurality of local solutions, whether or not the number of the plurality of second tabu lists associated with the one local solution held in the storage unit reaches an upper limit,
adds, when the upper limit is not reached, the second tabu list associated with the other local solution to the storage unit,
deletes, when the upper limit is reached, the second tabu list associated with the local solution that has the longest time since the local solution is finally reached among the plurality of local solutions from the storage unit, and adds the second tabu list associated with the other local solution to the storage unit.

**8.** The information processing apparatus according to claim 1, wherein in selection of the first state variable, the processing unit specifies a plurality of change candidate state variables from the plurality of state variables based on the selected tabu list, and selects, as the first state variable, the state variable corresponding to the best amount of change among the amount of change corresponding to each of the plurality of change candidate state variables.

**9.** The information processing apparatus according to claim 8, wherein in selection of the first state variable, the processing unit selects the state variable as the first state variable, even the state variable is excluded from the plurality of change candidate state variables by the selected tabu list, when a solution better than a best solution already obtained at the current moment may be obtained by changing a value of the state variable.

**10.** A computer-implemented method of searching for a solution to a problem represented by an energy function that includes a plurality of state variables that represents a state of an Ising model, the method comprising:

selecting one tabu list from a plurality of tabu lists in accordance with a current state of the Ising model in searching for the solution, each of the plurality of tabu lists being a tabu list that indicates a state variable for which change of a value is suppressed among the plurality of state variables;
selecting a first state variable from the plurality of state variables based on an amount of change of a value of the energy function in a case where a value of each of the plurality of state variables is changed from the current state and the selected tabu list; and
changing a value of the first state variable.

**11.** A non-transitory computer-readable storage medium storing a program of searching for a solution to a problem represented by an energy function that includes a plurality of state variables that represents a state of an Ising model, the program causing a computer to perform processing, the processing comprising:

selecting one tabu list from a plurality of tabu lists in accordance with a current state of the Ising model in searching for the solution, each of the plurality of tabu lists being a tabu list that indicates a state variable for which change of a value is suppressed among the plurality of state variables;
selecting a first state variable from the plurality of state variables based on an amount of change of a value of the energy function in a case where a value of each of the plurality of state variables is changed from the current state and the selected tabu list; and
changing a value of the first state variable.

# FIG. 1

INFORMATION PROCESSING APPARATUS 10

STORAGE UNIT 11

TABU LIST 11a

TABU LIST 11b

PROCESSING UNIT 12

20

ENERGY E(X)

X2    X1    STATE X

# FIG. 2

INFORMATION PROCESSING APPARATUS — 100

| | | |
|---|---|---|
| CPU — 101 | GPU — 104 | (display — 31) |
| RAM — 102 | INPUT INTERFACE — 105 | (device — 32) |
| HDD — 103 | MEDIUM READER — 106 | (medium — 33) |
| | NIC — 107 | NETWORK — 34 |

# FIG. 3

INFORMATION PROCESSING APPARATUS    100

BIT HOLDING UNIT    110

| $x_0$ | $x_1$ | $x_2$ | $x_3$ | $x_4$ | $x_5$ | $x_6$ | $x_7$ |

PROBLEM INFORMATION STORAGE UNIT    170

$\Delta E$ CALCULATING UNIT    120

| $\Delta E_0$ | $\Delta E_1$ | $\Delta E_2$ | $\Delta E_3$ | $\Delta E_4$ | $\Delta E_5$ | $\Delta E_6$ | $\Delta E_7$ |

TRANSITION DESTINATION DETERMINATION UNIT    130

BEST SOLUTION STORAGE UNIT    190

CURRENT ENERGY STORAGE UNIT    180

TABU LIST HOLDING UNIT    140

TABU LIST    150

TABU LIST FOR LOCAL SOLUTION    160   160a

# FIG. 4

EP 4 187 448 A1

# FIG. 5

TABU LIST FOR LOCAL SOLUTION (tabu_list[1] )  — 160, 160a

LOCAL SOLUTION HOLDING UNIT — 164

| $x_0$ | $x_1$ | $x_2$ | $x_3$ | $x_4$ | $x_5$ | $x_6$ | $x_7$ |

| 161 | 161a | 161b | 161c | 161d | 161e | 161f | 161g |
|---|---|---|---|---|---|---|---|
| COUNTER | COUNTER | COUNTER | COUNTER | COUNTER | COUNTER | COUNTER | COUNTER |
| 162 | 162a | 162b | 162c | 162d | 162e | 162f | 162g |
| SUBTRACTION UNIT | SUBTRACTION UNIT | SUBTRACTION UNIT | SUBTRACTION UNIT | SUBTRACTION UNIT | SUBTRACTION UNIT | SUBTRACTION UNIT | SUBTRACTION UNIT |
| 163 | 163a | 163b | 163c | 163d | 163e | 163f | 163g |
| tt SETTING UNIT | tt SETTING UNIT | tt SETTING UNIT | tt SETTING UNIT | tt SETTING UNIT | tt SETTING UNIT | tt SETTING UNIT | tt SETTING UNIT |

EP 4 187 448 A1

# FIG. 6

START

S10

it = 0

S11

CALCULATE TRANSITION DESTINATION ΔE

S12

tabu_list SELECTION

S13

DETERMINE TRANSITION DESTINATION BASED ON TABU LIST

S14

tabu_list[0] UPDATE

S15

tabu_list[k] SELECTION AND UPDATE

S16

UPDATE STATE

S17

UPDATE BEST SOLUTION

S18

it = it + 1

S19

it = num_iteration ?

NO

YES

END

# FIG. 7

```
        ┌────────────────────┐
        │   START tabu_list   │
        │     SELECTION       │
        └──────────┬──────────┘
                   │
                   ▼                    ⌐ S20
        ╱─────────────────────────╲
       ╱  tabu_list[k] CORRESPONDING ╲──────────────────┐
       ╲  TO CURRENT STATE EXISTS?   ╱   NO              │
        ╲─────────────────────────╱                     │
                   │ YES                                 │
                   ▼            ⌐ S21                     ▼            ⌐ S22
        ┌────────────────────┐          ┌────────────────────────┐
        │  SELECT tabu_list[k] │          │   SELECT tabu_list[0]   │
        └──────────┬──────────┘          └───────────┬────────────┘
                   │                                  │
                   │◄─────────────────────────────────┘
                   ▼
        ┌────────────────────┐
        │        END         │
        └────────────────────┘
```

# FIG. 8

START tabu_list[k]
SELECTION AND UPDATE

S30

IS CURRENT STATE LOCAL
SOLUTION?
— NO
YES

S31

tabu_list[k]
CORRESPONDING TO
CURRENT STATE EXISTS?
— NO
YES

S32

EMPTY tabu_list[k] EXISTS?
— NO
YES

S33

SELECT OLDEST tabu_list[k]
REACHED IN PAST

S34

SET COUNTERS OF ALL BITS
IN tabu_list[k] TO 0 AND
ASSOCIATE tabu_list[k] WITH
CURRENT STATE X

S35

tabu_list[k] UPDATE

END

FIG. 9

40

STATE D

STATE C

STATE A

STATE B

# FIG. 10

50

| INDEX | [0] | [1] | [2] | [3] | [4] | [5] | [6] | [7] | |
|---|---|---|---|---|---|---|---|---|---|
| **(ST10)** BIT $x_i$ | 0 | 1 | 1 | 0 | 1 | 0 | 0 | 1 | STATE A |
| $DE_i$ | 1 | 2 | -3 | 4 | 8 | 9 | 3 | 7 | |

| | | | | | | | | | |
|---|---|---|---|---|---|---|---|---|---|
| **(ST11)** BIT $x_i$ | 0 | 1 | **0** | 0 | 1 | 0 | 0 | 1 | STATE B |
| $DE_i$ | 8 | 5 | 3 | 7 | 8 | 4 | 9 | 9 | |

| | | | | | | | | | |
|---|---|---|---|---|---|---|---|---|---|
| **(ST12)** BIT $x_i$ | 0 | 1 | **1** | 0 | 1 | 0 | 0 | 1 | STATE A |
| $DE_i$ | 1 | 2 | -3 | 4 | 8 | 9 | 3 | 7 | |

| | | | | | | | | | |
|---|---|---|---|---|---|---|---|---|---|
| **(ST13)** BIT $x_i$ | 0 | 1 | **0** | 0 | 1 | 0 | 0 | 1 | STATE B |
| $DE_i$ | 8 | 5 | 3 | 7 | 8 | 4 | 9 | 9 | |

# FIG. 11

60

| INDEX | [0] | [1] | [2] | [3] | [4] | [5] | [6] | [7] |
|---|---|---|---|---|---|---|---|---|
| **(ST20)** BIT $x_i$ | 0 | 1 | 1 | 0 | 1 | 0 | 0 | 1 |
| $DE_i$ | 1 | 2 | -3 | 4 | 8 | 9 | 3 | 7 |
| TABU LIST COUNTER | 0 | 0 | 0 | 0 | 0 | 0 | 0 | 0 |
| **(ST21)** BIT $x_i$ | 0 | 1 | **0** | 0 | 1 | 0 | 0 | 1 |
| $DE_i$ | 8 | 5 | 3 | 7 | 8 | 4 | 9 | 9 |
| TABU LIST COUNTER | 0 | 0 | **3** | 0 | 0 | 0 | 0 | 0 |
| **(ST22)** BIT $x_i$ | 0 | 1 | 0 | 0 | 1 | **1** | 0 | 1 |
| $DE_i$ | 4 | 2 | 5 | 5 | -1 | -4 | 6 | 6 |
| TABU LIST COUNTER | 0 | 0 | 2 | 0 | 0 | **3** | 0 | 0 |
| **(ST23)** BIT $x_i$ | 0 | 1 | 0 | 0 | **0** | 1 | 0 | 1 |
| $DE_i$ | 2 | 1 | 0 | 5 | 1 | 3 | 1 | 2 |
| TABU LIST COUNTER | 0 | 0 | 1 | 0 | **3** | 2 | 0 | 0 |

FIG. 12

EP 4 187 448 A1

70

STATE C

STATE A

STATE B

STATE D

# FIG. 13

INFORMATION PROCESSING APPARATUS — 100

CPU — 101

GPU — 104

RAM — 102

INPUT INTERFACE — 105

HDD — 103

MEDIUM READER — 106

NIC — 107

31

32

33

NETWORK — 34

ACCELERATOR CARD — 108

GPU — 108a

RAM — 108b

EP 4 187 448 A1

Europäisches
Patentamt

European
Patent Office

Office européen
des brevets

# EUROPEAN SEARCH REPORT

Application Number

EP 22 19 3874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. ZHENG ET AL: "A hybrid method combining Tabu search and Nelder-Mead algorithms for global continuous optimization problems", PROCEEDINGS OF THE 22ND INTERNATIONAL CONFERENCE ON COMPUTER SUPPORTED COOPERATIVE WORK IN DESIGN (CSCWD'18), 9 May 2018 (2018-05-09), pages 17-24, XP033400799, DOI: 10.1109/CSCWD.2018.8465387 * sections I and IV * | 1-11 | INV. G06N5/01 G06N7/01 |
| X | H. M. PILEGAARD: "Tabu search for multiobjective combinatorial optimization: TAMOCO", CONTROL AND CYBERNETICS, vol. 29, no. 3, 2000, pages 799-818, XP093035731, ISSN: 0324-8569 * sections 1 and 2 * | 1-11 | |
| X | C. ANSÓTEGUI ET AL: "Hyper-reactive Tabu search for MaxSAT", LECTURE NOTES IN COMPUTER SCIENCE, vol. 11353, 31 December 2018 (2018-12-31), pages 309-325, XP047498627, DOI: 10.1007/978-3-030-05348-2_27 * sections 3 and 4 * | 1-11 | TECHNICAL FIELDS SEARCHED (IPC) G06N |
| X | A. MISEVICIUS, J. BLONSKIS: "Experiments with Tabu search for random quadratic assignment problems", INFORMATION TECHNOLOGY AND CONTROL, vol. 34, no. 3, 17 September 2005 (2005-09-17), pages 237-244, XP093035553, ISSN: 1392-124X * Introduction; sections 1 and 2 * | 1-11 | |

The present search report has been drawn up for all claims

| Place of search | Date of completion of the search | Examiner |
|---|---|---|
| The Hague | 29 March 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008059146 A
- JP 2009048353 A
- US 20160071021
- US 20190080271

**Non-patent literature cited in the description**

- **Y. WANG et al.** Path relinking for unconstrained binary quadratic programming. *European Journal of Operational Research,* 16 December 2012, vol. 223 (3), 595-604